(19) Europäisches Patentamt
European Patent Office
Office européen des brevets

(11) **EP 3 861 670 B1**

(12) **FASCICULE DE BREVET EUROPEEN**

(45) Date de publication et mention de la délivrance du brevet:
**06.03.2024 Bulletin 2024/10**

(21) Numéro de dépôt: **19801956.4**

(22) Date de dépôt: **03.10.2019**

(51) Classification Internationale des Brevets (IPC):
**H04L 9/00** *(2022.01)*

(52) Classification Coopérative des Brevets (CPC):
**H04L 9/008;** H04L 2209/76; H04L 2209/88

(86) Numéro de dépôt international:
**PCT/FR2019/052353**

(87) Numéro de publication internationale:
**WO 2020/070455 (09.04.2020 Gazette 2020/15)**

(54) **MÉTHODE DE TRANSCHIFFREMENT À FAIBLE LATENCE DE CALCUL APPLIQUÉE AU CHIFFREMENT HOMOMORPHE**

VERFAHREN ZUR TRANSVERSCHLÜSSELUNG MIT NIEDRIGER LATENZZEIT FÜR ANWENDUNGSFÄLLE DER HOMOMORPHEN VERSCHLÜSSELUNG

METHOD FOR LOW LATENCY TRANSCIPHERING FOR HOMOMORPHIC ENCRYPTION USE CASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2018 FR 1859251**

(43) Date de publication de la demande:
**11.08.2021 Bulletin 2021/32**

(73) Titulaire: **Commissariat à l'énergie atomique et aux énergies alternatives 75015 Paris (FR)**

(72) Inventeurs:
• **SIRDEY, Renaud 78720 CERNAY-LA-VILLE (FR)**
• **CARPOV, Sergiu 91300 MASSY (FR)**

(74) Mandataire: **Brevalex 56, Boulevard de l'Embouchure B.P. 27519 31075 Toulouse Cedex 2 (FR)**

(56) Documents cités:
**US-B2- 7 284 014**

• **CARPOV SERGIU ET AL: "Practical Privacy-Preserving Medical Diagnosis Using Homomorphic Encryption", 2016 IEEE 9TH INTERNATIONAL CONFERENCE ON CLOUD COMPUTING (CLOUD), IEEE, 27 juin 2016 (2016-06-27), pages 593-599, XP033047954, DOI: 10.1109/CLOUD.2016.0084**
• **SINGH KALPANA ET AL: "Practical personalized genomics in the encrypted domain", 2018 THIRD INTERNATIONAL CONFERENCE ON FOG AND MOBILE EDGE COMPUTING (FMEC), IEEE, 23 avril 2018 (2018-04-23), pages 139-146, XP033351568, DOI: 10.1109/FMEC.2018.8364056**

**Description**

## DOMAINE TECHNIQUE

La présente invention concerne de manière générale le domaine du chiffrement homomorphe et plus particulièrement celui du transchiffrement de données préalablement chiffrées au moyen d'un cryptosystème symétrique.

## ÉTAT DE LA TECHNIQUE ANTÉRIEURE

Le chiffrement homomorphe permet d'effectuer des opérations (en pratique des opérations arithmétiques d'addition ou de multiplication) sur des données sans jamais les dévoiler.

Un chiffrement homomorphe est un chiffrement (en règle générale asymétrique) $Enc_{pk}$ (de clé publique $pk$) vérifiant la propriété suivante :

$$Enc_{pk} : \Omega \rightarrow \Gamma$$

$$Dec_{sk}\left[Enc_{pk}(a) \oplus Enc_{pk}(b)\right] = a + b \qquad (1)$$

où $\Omega$ est l'espace des messages clairs (dit plus simplement espace des clairs) et $\Gamma$ est l'espace des messages chiffrés (dit plus simplement espace des chiffrés), + une opération additive dans l'espace des clairs conférant à $\Omega$ une structure de groupe, $\oplus$ une opération dans l'espace des chiffrés conférant à $\Gamma$ une structure de groupe. On comprend ainsi que l'application de $(\Omega,+)$ dans $(\Gamma,\oplus)$ est un homomorphisme de groupes. $Dec_{sk}$ est la fonction de déchiffrement correspondant à $Enc_{pk}$ (où $sk$ est la clé secrète de l'utilisateur).

Il résulte de l'expression (1) qu'il est possible d'effectuer une opération additive entre deux clairs ($a,b$) à partir d'une opération correspondante entre leurs chiffrés correspondants ($Enc_{pk}(a)$, $Enc_{pk}(b)$).

Plus généralement, un chiffrement homomorphe peut être considéré comme un morphisme d'anneau entre l'espace des clairs (muni des opérations +,x) et l'espace des chiffrés (muni des opérations correspondantes $\oplus$, $\otimes$). On a alors les propriétés suivantes :

$$Dec_{sk}\left(Enc_{pk}(a+b)\right) = Dec_{sk}\left(Enc_{pk}(a) \oplus Enc_{pk}(b)\right) = a + b \qquad (2\text{-}1)$$

$$Dec_{sk}\left(Enc_{pk}(a \times b)\right) = Dec_{sk}\left(Enc_{pk}(a) \otimes Enc_{pk}(b)\right) = a \times b \qquad (2\text{-}2)$$

Les définitions précédentes ont été données dans le cas d'opérations additives et multiplicatives mais il est bien entendu que tout couple d'opérations conférant à l'espace des chiffrés une structure d'anneau peut être envisagé.

A l'aide des expressions (2-1) et (2-2), il est possible d'évaluer une fonction $f$ quelconque, décomposable en opérations élémentaires d'addition et de multiplication, dans l'espace des chiffrés puis de déchiffrer le résultat.

Dans la suite de la description, nous utiliserons les notations $Enc(HE.pk,a)$ et $Dec(HE.sk,x)$ en lieu et place de $Enc_{pk}(a)$ et $Dec_{sk}(x)$ pour désigner respectivement une opération de chiffrement homomorphe (de $a$) avec la clé publique $HE.pk$ et de déchiffrement homomorphe (de $x$) à l'aide de la clé privée $HE.sk$.

Le chiffrement homomorphe permet par exemple à un client de déléguer un traitement de ses données à un serveur distant, sans que celui-ci puisse avoir accès aux données. Pour ce faire, le client génère une clé privée d'un cryptosystème homomorphe et chiffre les données à traiter au moyen de la clé publique correspondante. Les données ainsi chiffrées sont transmises au serveur qui effectue le traitement en question dans le domaine homomorphe et retourne le résultat, toujours chiffré dans le domaine homomorphe, au client. Celui-ci peut alors récupérer le résultat du traitement en clair, après l'avoir déchiffré avec la clé privée du cryptosystème.

Cette méthode de traitement confidentiel des données présente toutefois un inconvénient majeur, celui de la taille des données chiffrées en homomorphe. Dans le meilleur des cas, il faut compter environ 2 koctets de données chiffrées en homomorphe pour 1 bit de données en clair. Afin de remédier à cette inflation de données chiffrées, on peut recourir à une technique de transchiffrement.

De manière générale, un transchiffrement permet de passer de données chiffrées par un premier cryptosystème aux mêmes données chiffrées par un second cryptosystème, sans passer par une étape intermédiaire de déchiffrement dans l'espace des clairs.

Dans la suite, nous supposerons que le premier cryptosystème est celui d'un chiffrement par flot et que le second système est celui d'un chiffrement homomorphe.

Un chiffrement par flot est un chiffrement symétrique dans lequel le message à chiffrer est simplement additionné bit à bit avec un flot de clé (*key stream*), noté *Kstr,* généré à partir d'une clé symétrique, *ksym.* Le déchiffrement est réalisé comme le chiffrement, par simple addition bit à bit de la donnée chiffrée avec le flux de clé.

Ainsi, si l'on note *a* une donnée en clair, $S(ksym,a)$, la donnée chiffrée par le chiffrement symétrique $S$ (c'est-à-dire par addition avec le flot de clé *Kstr* dans le cas d'un chiffrement par flot), $S^{-1}$ l'opération de déchiffrement (identique à S dans le cas d'un chiffrement par flot) et $S^{-1}_{HE}$ cette même opération de déchiffrement dans le domaine homomorphe :

$$S^{-1}_{HE}\left(Enc\left(HE.pk,ksym\right),Enc\left(HE.pk,S\left(ksym,a\right)\right)\right)=Enc(HE.pk,a)$$

$$(3)$$

Autrement dit, il est possible de déchiffrer dans le domaine homomorphe une donnée chiffrée une première fois par le chiffrement symétrique, $S(ksym,a)$, et une seconde fois par le chiffrement homomorphe.

Le déchiffrement par flot est simplement réalisé dans le domaine homomorphe (c'est-à-dire dans le domaine des chiffrés homomorphes), au moyen du chiffré homomorphe du flux de clé et de l'opération élémentaire $\oplus$ :

$$S^{-1}_{HE}\left(Enc\left(HE.pk,ksym\right),Enc\left(HE.pk,S\left(ksym,a\right)\right)\right)=$$

$$Enc\left(HE.pk,Kstr\right)\oplus Enc\left(HE.pk,S\left(ksym,a\right)\right)$$

$$(4)$$

Le flot de clé, *Kstr,* est généralement obtenu à partir d'un ensemble de registres à décalage rebouclés dont certaines prises et/ou sorties sont combinées non linéairement. Ces registres à décalage sont initialisés par des valeurs initiales obtenues à partir de la clé symétrique, *ksym* , et d'un vecteur d'initialisation, *IV* . Alors que la clé symétrique reste identique d'une opération de chiffrement à l'autre, le vecteur d'initialisation (sortie de compteur par exemple) peut être incrémenté périodiquement. Des algorithmes de chiffrement par flot tels que Trivium, Kreyvium, ou ceux de la famille FLIP, utilisent ce principe d'initialisation.

Le chiffré homomorphe du flux de clé $Enc$ ($HE.pk$, $Kstr$) est généré dans le domaine homomorphe à partir de $Enc(HE.pk,ksym)$, encore appelé jeton (public) de transchiffrement. En d'autres termes, de même que l'on sait générer un flux de clé à partir de la clé symétrique, *ksym,* dans l'espace des clairs, on sait générer un chiffré homomorphe de flux de clé à partir du jeton de transchiffrement $Enc(HE.pk,ksym)$, dans l'espace homomorphe, comme décrit par exemple dans l'article (cf. notamment 9 2.2) de A. Canteau et al. intitulé « Stream-ciphers : a practical solution for efficient homomorphic-ciphertext compression » publié dans FSE 2016 : 23rd International Conférence on Fast Software Encryption, Springer Verlag, 20-23 March 2016, Bochum, Germany, 2016, vol. 9783 - LNCS (Lecture Notes in Computer Science), pp. 313-333.

On voit dans l'expression (4) que le premier terme de droite, $Enc$ ($HE.pk$, $Kstr$), autrement dit le chiffré homomorphe du flot de clé, peut être calculé hors ligne, une fois pour toutes pour autant que les conditions d'initialisation (vecteur *IV* ) restent inchangées.

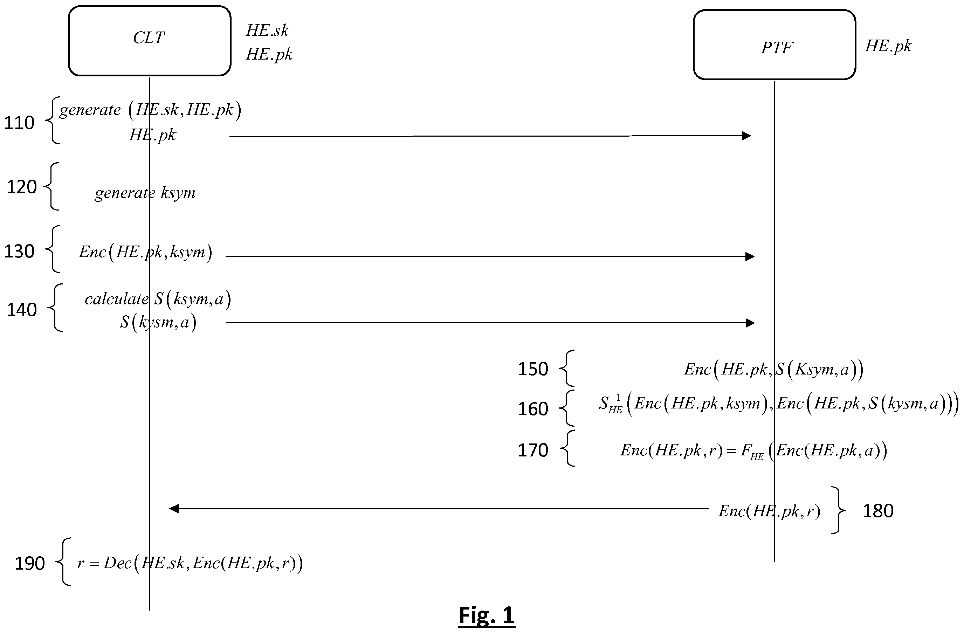

La situation d'un client faisant appel à une plateforme distante pour lui faire effectuer un traitement de données de manière confidentielle a été illustrée en Fig. 1.

A l'étape 110, le client, *CLT*, génère un couple de clé privée et de clé publique d'un cryptosystème homomorphe (asymétrique), soit *HE.sk, HE.pk* et envoie à la plateforme distante, *PTF*, la clé publique *HE.pk* . Par ailleurs, le client génère en 120 une clé symétrique de chiffrement par flot, *ksym* , puis, en 130, le jeton de transchiffrement, *Enc* ($HE.pk$, $ksym$), correspondant à cette clé et à un vecteur d'initialisation *IV* . Tant que le vecteur d'initialisation n'est pas modifié, le jeton de transchiffrement peut être utilisé pour le traitement des requêtes du client en question.

A l'étape 140, le client chiffre les données à traiter, *a*, au moyen du chiffrement symétrique , soit $S(ksym,a)$ et transmet une requête de traitement, *PR*, à la plateforme, ayant pour argument $S(ksym,a)$.

A l'étape 150, la plateforme effectue un chiffrement homomorphe des données chiffrées $S(ksym,a)$ au moyen de la clé publique, *HE.pk* .

A l'étape 160, la plateforme effectue un transchiffrement des données à traiter *a* , selon l'expression (4). Le résultat du transchiffrement n'est autre que $Enc(HE.pk,a)$.

A l'étape 170, la plateforme effectue le traitement des données, F, dans le domaine homomorphe, soit $F_{HE}$.

Le résultat est obtenu sous forme chiffrée dans le domaine homomorphe, $Enc(FHE.pk, r) = F_{HE}(Enc(FHE.pk,a))$.

A l'étape 180, la plateforme retourne le résultat sous forme chiffrée au client qui le déchiffre en 190 au moyen de la clé privée, *FHE.sk*, pour obtenir le résultat en clair, $r = F(a)$.

On notera d'abord que le client peut générer directement le chiffré homomorphe du flux de clé, $Enc(HE.pk,Kstr)$, en 130, et le transmettre à la plateforme.

On notera d'autre part, que l'étape 150 peut être également effectuée par le client, auquel cas la requête de traitement a pour argument $Enc(HE.pk,S(ksym,a))$. L'étape de transchiffrement, 160, peut alors être effectuée très rapidement, au fil de l'eau, au moyen d'une simple addition bit à bit (opération XOR) dans le domaine homomorphe, soit $Enc(HE.pk,Kstr) \oplus Enc(HE.pk,S(ksym,a))$. On comprend que l'étape de transchiffrement n'induise dès lors quasiment pas de latence.

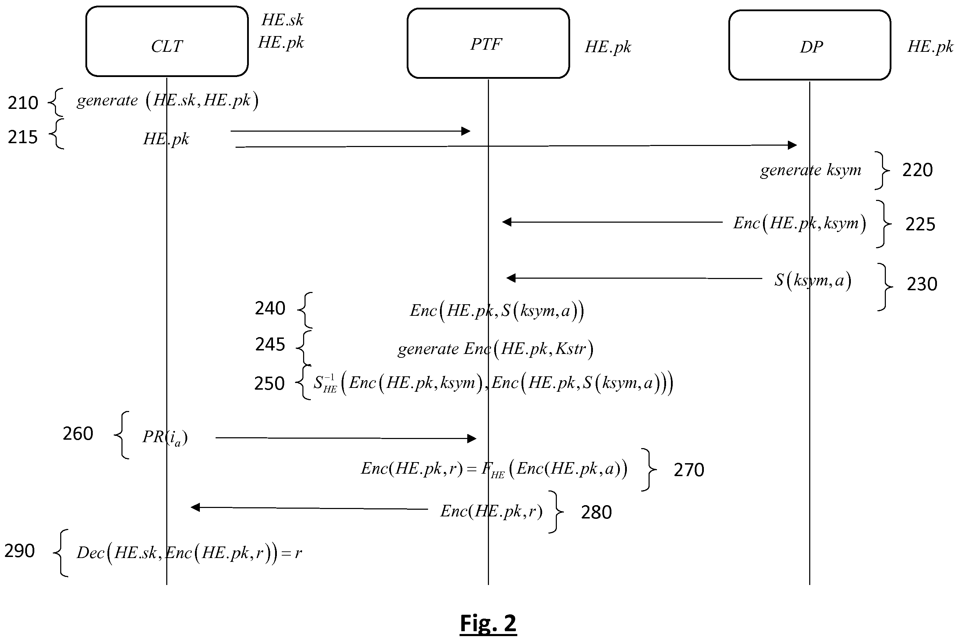

La situation diffère cependant lorsqu'un client souhaite effectuer un traitement confidentiel sur des données stockées sur la plateforme et non plus transmises avec une requête. Cette situation, illustrée en Fig. 2, fait intervenir un client (ou utilisateur de données), *CLT*, une plateforme chargée de l'exécution des requêtes, *PTF*, et un fournisseur de données, *DP*.

Le client génère comme précédemment en 210 une paire de clé privée et de clé publique d'un cryptosystème homomorphe *HE.sk*, *HE.pk* . La clé publique *HE.pk* est transmise à la plateforme ainsi qu'au fournisseur de données en 215.

Le fournisseur de données génère de son côté en 220 une clé symétrique *ksym* d'un cryptosystème symétrique ainsi que le jeton de transchiffrement correspondant, $Enc$ (*HE.pk*, *ksym*) . Le jeton de transchiffrement est transmis à la plateforme en 225.

Par ailleurs, les données, a, du fournisseur de données sont chiffrées au moyen de la clé symétrique, *ksym*, autrement dit ces données sont sommées bit à bit au flux de clé, *Kstr*, en 230, avant d'être transmises à la plateforme.

Les données chiffrées, $S(ksym,a)$ sont chiffrées une seconde fois en homomorphe par la plateforme à l'étape 240, pour obtenir $Enc(HE.pk,S(ksym,a))$.

Par ailleurs, en 245, le chiffré homomorphe du flux de clé, soit $Enc(HE.pk,Kstr)$ , est généré par la plateforme à partir du jeton de transchiffrement $Enc(HE.pk,ksym)$.

A l'étape 250, les données chiffrées font l'objet d'un transchiffrement au moyen de l'expression (4). Le résultat est constitué par ces mêmes données, chiffrées dans le domaine homomorphe, à savoir $Enc(HE.pk,a)$.

Ainsi, lorsque le client demande en 260, au moyen d'une requête, $PR(i_a)$, qu'un traitement soit effectué sur des données du fournisseur de données, la plateforme recherche les données correspondantes disponibles dans le domaine homomorphe, $Enc(HE.pk,a)$, et effectue en 270 le traitement demandé $F_{HE}$ . Le résultat est obtenu dans le domaine homomorphe $Enc(HE.pk,r)$ avec $r = F(a)$.

Le résultat est ensuite transmis en 280 au client qui le déchiffre en 290 au moyen de la clé privée *HE.sk* pour obtenir le résultat en clair, $r = F(a)$.

Dans ce contexte d'utilisation, les données fournies par le fournisseur d'accès sont stockées sur la plateforme sous forme chiffrée dans le domaine homomorphe. Toutefois, étant donné la forte inflation de la taille des données lors de leur chiffrement dans le domaine homomorphe, cette solution n'est pas acceptable pour des bases de données de volume important, telle qu'une base de données génomiques par exemple.

Une solution serait de demander au fournisseur de données d'effectuer le chiffrement homomorphe au coup par coup. Toutefois, une telle solution serait pénalisante en termes de latence pour le traitement de la requête.

Le but de la présente invention est par conséquent de proposer une méthode de traitement confidentiel de données stockées sur une plateforme distante qui ne présente pas de latence de calcul importante. Plus précisément, le but de la présente invention est de proposer une méthode de transchiffrement qui n'induise qu'un très faible temps de latence lors d'un tel traitement.

**EXPOSÉ DE L'INVENTION**

La présente invention est définie par une méthode de traitement confidentiel de données stockées sur une plateforme, les données étant stockées dans une base de données, sous une forme chiffrée par un chiffrement par flot, à l'aide d'un flux de clé généré à partir d'une clé symétrique, le traitement confidentiel étant effectué à la requête d'un client ayant préalablement généré un couple de clé secrète et de clé publique d'un cryptosystème homomorphe et ayant transmis ladite clé publique à la plateforme, la méthode de traitement comportant les étapes suivantes :

un module de gestion des requêtes (*RQM*), recevant une requête du client ($PR(i_a)$), génère une pluralité de demandes d'accès ( $arq_1,...,arq_N$ ) à des blocs de données ( $B_1,...,B_N$ ) et transmet ces demandes à un module de transchiffrement (*TCA*) ;

le module de transchiffrement *(TCA)*, recevant une demande d'accès ($arq_n$) à un bloc de données, transmet la demande d'accès à un module de prédiction de demandes d'accès ( *AP* ) qui lui retourne une liste ( $\Omega_n$ ) de blocs

de données dont l'accès est prédit ;

le module de transchiffrement (*TCA*) lit le bloc de données ( $B_n$ ) dans la base de données et détermine si un bloc de flux de clé correspondant est présent dans la mémoire cache, et dans la négative l'ajoute à la liste de blocs de données, la liste de blocs de données étant fournie à un module de calcul homomorphe ( *KSHC* ) ;

le module de calcul homomorphe ( *KSHC* ) est adapté à calculer dans le domaine homomorphe des chiffrés homomorphes de blocs de flux de clé correspondant aux blocs de données de ladite liste, et à transmettre les chiffrés homomorphes des blocs de flux de clé, au module de transchiffrement au fur et à mesure de leur obtention ;

le module de transchiffrement (*TCA*) stocke les chiffrés en homomorphe des blocs de flux de clé dans la mémoire cache, et transchiffre les blocs de données dont l'accès est demandé en les additionnant respectivement avec les chiffrés homomorphes des blocs de flux de clé correspondants, lus de la mémoire cache ;

le module de tranchiffrement *(TCA)* transmet les blocs de données ainsi transchiffrés au module de gestion des requêtes ( *RQM* ) qui effectue, dans le domaine homomorphe, le traitement sur les blocs de données ainsi transchiffrés correspondant à la requête ;

le module de gestion des requêtes ( *RQM* ) transmet au client le résultat du traitement, sous forme chiffrée en homomorphe.

Selon un exemple de réalisation, les modules de gestion des requêtes, de transchiffrement, de prédiction de demandes d'accès et de calcul homomorphe sont des agents logiciels.

Selon un premier type d'implémentation, les modules de gestion des requêtes, de transchiffrement, de prédiction de demandes d'accès et de calcul homomorphe sont installés sur une même machine.

Selon un second type d'implémentation, les modules de gestion des requêtes, de transchiffrement, de prédiction de demandes d'accès sont situés sur une première machine et le module de calcul homomorphe est installé sur une seconde machine. Dans ce cas, la seconde machine peut être équipée d'un accélérateur matériel de chiffrement homomorphe.

La seconde machine peut notamment être un serveur, la première machine transmettant de manière asynchrone au serveur des requêtes de chiffrés en homomorphe de blocs de flux de clé pour des opérations de transchiffrement à effectuer ou pour des opérations de transchiffrement prédites.

La plateforme peut héberger une pluralité de bases de données, chaque base de données étant alimentée par un fournisseur de données et étant associée à une clé de chiffrement symétrique, les blocs de données stockés dans une base de données étant chiffrés par le fournisseur de données alimentant la base, au moyen d'un flux de clé généré à partir de la clé symétrique associée à cette base de données.

La mémoire cache peut être gérée par un algorithme de remplacement de type FIFO. Alternativement, elle peut être gérée par un algorithme de remplacement de type LRU ou MRU.

Avantageusement, la plateforme comprend une pluralité de modules de prédiction d'accès, chaque module de prédiction d'accès étant adapté à prédire les demandes d'accès à une base de données associée à ce module.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique une première méthode d'exécution confidentielle d'une requête de traitement de données, faisant appel à une étape de transchiffrement connue de l'état de la technique ;

La Fig. 2 représente de manière schématique une seconde méthode d'exécution confidentielle d'une requête de traitement de données, faisant appel à une étape de transchiffrement connue de l'état de la technique ;

La Fig. 3 représente de manière schématique une méthode d'exécution confidentielle d'une requête de traitement de données faisant appel à une étape de transchiffrement selon un mode de réalisation de l'invention.

## EXPOSÉ DÉTAILLÉ DE MODES DE RÉALISATION PARTICULIERS

On considère dans la suite un contexte applicatif tel que celui représenté en Fig. 2. De manière plus générale, la plateforme distante pourra être interrogée par une pluralité de clients, chaque client disposant de son propre cryptosystème (asymétrique) homomorphe et transmettant la clé publique dudit cryptosystème à la plateforme ainsi qu'au fournisseur de données. De même, la plateforme distante pourra recevoir et stocker des données d'une pluralité de fournisseurs de données, chaque fournisseur disposant de sa propre clé symétrique et transmettant cette dernière à la plateforme, après l'avoir chiffrée au moyen de la clé publique d'un cryptosystème homomorphe d'un client possédant un droit d'accès. Par exemple, les fournisseurs de données pourront être des patients transmettant leurs données génomiques sous forme chiffrée à une plateforme et les clients pourront être des médecins souhaitant consulter ces données génomiques. On supposera dans la suite que les clients et les fournisseurs de données peuvent s'identifier et s'authentifier auprès de la plateforme et que les clients disposent de droits d'accès aux données dont ils souhaitent faire effectuer le traitement. Dans certains cas, les clients peuvent être confondus avec les fournisseurs d'accès où à un sous-ensemble d'entre eux seulement. Ainsi, dans l'exemple précité, outre les médecins, les patients eux-mêmes pourront accéder à leurs propres données génomiques et faire effectuer de manière confidentielle des traitements sur ces données. Enfin, les droits d'accès des différents clients pourront différer, par exemple être limités à certaines bases de données hébergées par la plateforme, à certains champs de données ou encore à certains types de traitement seulement. La gestion des droits d'accès n'entre toutefois pas dans le cadre de la présente invention.

La méthode de transchiffrement selon la présente invention fait intervenir plusieurs agents : un module de gestion des requêtes de traitement, *RQM* , un module de transchiffrement, *TCA* , un module de prédiction des accès, AP, et un module de calcul homomorphe, *KSHC* . Ces modules sont en règle générale des agents logiciels faisant partie de la plateforme distante mais certains d'entre eux, notamment le module de calcul, pourront être réalisés sous forme de processeurs dédiés ou de processeurs équipés d'accélérateurs matériels. Certains éléments de la plateforme pourront être distribués dans le Cloud ou être hébergés par des serveurs distants.

Sans préjudice de généralisation, nous considérerons dans la suite le cas d'un client souhaitant faire exécuter par la plateforme un traitement de manière confidentielle sur des données préalablement fournies par un fournisseur d'accès. Les données du fournisseur d'accès sont stockées dans une base de données de la plateforme, sous forme chiffrée par la clé symétrique du fournisseur d'accès.

Les requêtes de traitement pourront concerner différents champs d'un enregistrement ou différents enregistrements présents dans une base de données hébergée par la plateforme. Par exemple, dans le premier cas, un médecin pourra souhaiter accéder à un gène donné chez une cohorte de patients, et dans le second cas, à différents gènes du génome d'un patient.

Chaque requête reçue par le module de gestion *RQM* spécifie, par exemple au moyen d'un index, sur quelles données doit être effectué le traitement. A la fin du traitement, le module de gestion retourne le résultat du traitement, sous forme chiffrée par la clé publique du cryptosystème homomorphe du client.

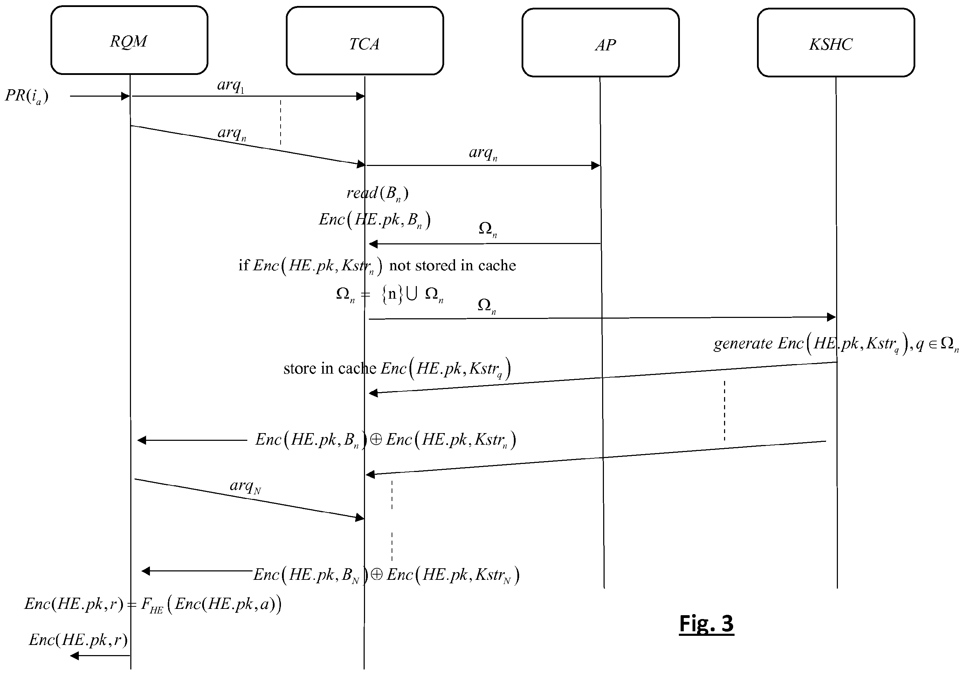

La Fig. 3 représente de manière schématique le chronogramme d'une méthode de traitement confidentiel de données faisant appel une méthode de transchiffrement selon l'invention.

On a représenté sur la figure le module de gestion des requêtes, *RQM* , le module de transchiffrement, *TCA* , le module de prédiction des accès, AP, et le module de chiffrement homomorphe, *KSHC* .

Lorsque le module *RQM* reçoit une requête de traitement de données, il génère une séquence de demandes d'accès aux données devant faire l'objet du traitement. Chaque demande d'accès est relative à un bloc de données. Ces demandes d'accès, désignées par $arq_1,...,arq_N$, sont transmises au module de transchiffrement, *TCA*, au fur et à mesure des besoins du traitement.

Lorsque le module de transchiffrement reçoit une demande d'accès, $arq_n$, celui-ci la fait suivre au module de prédiction des accès, AP . En outre, il lit dans la base de données le bloc de données, $B_n$, demandé dans la demande d'accès $arq_n$ et le chiffre en homomorphe au moyen de la clé publique *HE.pk* . On rappelle que le bloc de données $B_n$ est stocké sous forme chiffrée par la clé symétrique *ksym* (autrement dit par addition bit à bit du flux de clé *Kstr* ), soit $B_n = a_n + Kstr_n$ où $a_n$ représente les données en clair $Kstr_n$ le bloc de flux de clé servant à chiffrer $a_n$ .

Le module de transchiffrement a également accès à une mémoire cache contenant des chiffrés homomorphes des blocs du flux de clé, soit $Enc(HE.pk, Kstr_p)$ où $p$ est un indice de bloc dans le flux de clé.

Si le bloc $Enc(HE.pk, Kstr_n)$ est présent dans la mémoire cache, le module de transchiffrement effectue l'opération de transchiffrement :

$$Enc\left(HE.pk, Kstr_n\right) \oplus Enc\left(HE.pk, B_n\right) = Enc\left(HE.pk, a_n\right) \qquad (5)$$

et renvoie le résultat au module de gestion des requêtes.

Si le bloc $Enc(HE.pk, Kstr_n)$ n'est pas présent dans la mémoire cache, il se met en attente de ce bloc.

Le module de prédiction d'accès, AP, prédit à partir de la requête, $arq_n$, l'ensemble des blocs de données $B_q$, $q \in \Omega_n$ dont l'accès pourra être demandé lors des demandes d'accès suivantes. Cette prédiction peut être réalisée à partir de règles prédéterminées (connues *a priori*) dépendant de l'application ou bien être le fruit d'un apprentissage supervisé ou non supervisé. Dans tous les cas, le module de prévision AP retourne au module de transchiffrement la liste ordonnée $\Omega_n$ des indices de ces blocs de données.

Si la mémoire cache ne contient pas le bloc $Enc(HE.pk, Kstr_n)$, l'indice $n$ est ajouté à la liste ordonnée $\Omega_n$ et placé en tête de liste.

Le module de transchiffrement transmet la liste ordonnée $\Omega_n$ au module de chiffrement homomorphe, *KSHC* . Ce module génère successivement dans le domaine homomorphe, les chiffrés homomorphes des blocs de flux de clé, $Enc(HE.pk, Kstr_q)$, $q \in \Omega_n$ et les retourne au module de transchiffrement au fur et à mesure qu'ils sont calculés. Cette génération est effectuée par calcul dans le domaine homomorphe à partir du jeton de transchiffrement, *Enc(HE.pk,ksym)*.

Dès que le module de transchiffrement reçoit le bloc, *Enc(HE.pk,Kstr_n)*, celui-ci effectue l'opération de transchiffrement exprimée en (5) et renvoie le résultat au module de gestion des requêtes.

Les blocs subséquents sont stockés dans la mémoire cache au fur et à mesure qu'ils sont reçus.

Le processus se poursuit avec une nouvelle demande d'accès, $arq_{n+1}$ transmise par le module de gestion des requêtes au module de transchiffrement. Ce dernier fait suivre la demande d'accès au module de prédiction d'accès qui peut à nouveau prédire, l'ensemble des blocs de données $B_q$, $q \in \Omega_{n+1}$ dont l'accès pourra être demandé lors des demandes d'accès suivantes. Cette prédiction est toutefois optionnelle dans la mesure où les éléments de l'ensemble $\Omega_{n+1}$ peuvent être déjà présents dans l'ensemble $\Omega_n$. Si le module de prédiction effectue une nouvelle prédiction seuls les éléments de $\Omega_{n+1}$ n'appartenant pas à $\Omega_n$ sont transmis au module *KSHC*. Ce dernier génère dans le domaine homomorphe des chiffrés homomorphes de blocs de flux de clé correspondant aux indices de $\Omega_{n+1} - \Omega_n$ et les transmet au module de transchiffrement au fur et à mesure qu'ils sont calculés.

Le module de transchiffrement stocke les nouveaux chiffrés homomorphes des blocs de flux de clé dans la mémoire cache, au fur et à mesure qu'ils sont reçus.

La mémoire cache est gérée au moyen d'un algorithme de remplacement de lignes de cache ou CRP (*Cache Replacement Policy*) qui peut être indépendant de l'utilisation des blocs, par exemple un algorithme de remplacement de type FIFO (*First In First First Out*), ou bien dépendant de l'utilisation des blocs, par exemple un algorithme de type LRU (*Last Recently Used*) ou MRU (*Most Recently Used*).

L'homme du métier comprendra que le module de prédiction permet l'anticipation des accès et du calcul des chiffrés homomorphes de blocs de flux de clé, ce qui réduit considérablement la latence de l'opération de transchiffrement.

Lorsque le module de gestion des requêtes dispose de l'ensemble des blocs transchiffrés $Enc(HE.pk.a_n)$, $n=1,..., N$, celui effectue le traitement dans le domaine homomorphe et retourne au client le résultat $Enc(HE.pk,r)$ avec $r = F(a)$.

Le client peut alors déchiffrer le résultat avec la clé privée du cryptosystème homomorphe pour obtenir le résultat en clair, *r*.

Les différents modules *RQM, TCA, AP,* et *KSHC* peuvent être installés sur une même machine ou des machines distinctes.

Selon un premier mode de réalisation, les différents modules sont installés sur une même machine. Les connaissances *a priori* sur les requêtes sont alors celles qui sont adressées à cette machine. Les chiffrés homomorphes des blocs de flux de clé peuvent être calculés en mode pipeline dans l'intervalle de temps entre deux requêtes.

Selon un deuxième mode de réalisation, les modules *RQM, TCA, AP* sont installés sur une première machine et le module *KSHC* est installé sur une seconde machine, par exemple un serveur recevant de manière asynchrone des requêtes des chiffrés homomorphes de blocs de flux de clé.

Cette seconde machine est alors spécialisée dans la génération des chiffrés homomorphes des blocs de flux de clé $Enc(HE.pk,Kstr_q)$, c'est-à-dire dans le calcul dans le domaine homomorphe de ce flux de clé à partir du jeton de transchiffrement $Enc(HE.pk,ksym)$. La seconde machine peut être équipée d'accélérateurs matériels de manière à ce que le calcul homomorphe soit le plus rapide possible. La première machine peut transmettre à la seconde machine des requêtes de calcul de chiffrés homomorphes de blocs de flux de clé pour une opération de transchiffrement à effectuer, voire anticiper de manière spéculative des requêtes à venir.

Selon un troisième mode de réalisation, le module *KSHC* est réalisé en mettant en oeuvre une infrastructure distribuée dans le Cloud ou bien répartie sur une pluralité de serveurs, optimisée pour le calcul dans le domaine homomorphe. Là encore, cette infrastructure peut comprendre des accélérateurs matériels de manière à réduire le temps de calcul.

Quel que soit le mode de réalisation envisagé, la plateforme peut héberger plusieurs bases de données, chaque base de données étant alimentée par un fournisseur de données. Autrement dit, à chaque base de données est associée une clé symétrique. Les modules *RQM*, *TCA*, *AP*, et *KSHC* peuvent être communs à toutes ces bases de données mais, dans ce cas, le module AP utilisera des règles de prédiction distinctes selon les différentes bases. De même, le module *KSHC* générera des chiffrés homomorphes de flux de clé différents pour les différentes clés symétriques. Alternativement, on pourra prévoir autant de modules AP et de modules *KSHC* que de base de données, chaque module AP étant alors spécialisé dans la prédiction des accès dans la base de données à laquelle il est associé et chaque module *KSHC* étant spécialisé dans le calcul dans le domaine homomorphe de blocs de flux de clé, pour la clé symétrique à laquelle il est associé.

## Revendications

**1.** Méthode de traitement confidentiel de données stockées sur une plateforme, les données étant stockées dans une base de données, sous une forme chiffrée par un chiffrement par flot, à l'aide d'un flux de clé généré à partir d'une clé symétrique, le traitement confidentiel étant effectué à la requête d'un client ayant préalablement généré un couple de clé secrète et de clé publique d'un cryptosystème homomorphe et ayant transmis ladite clé publique à la plateforme, **caractérisé en ce que** :

un module de gestion des requêtes ( $RQM$ ), recevant une requête du client ($PR(i_a)$), génère une pluralité de demandes d'accès ( $arq_1,...,arq_N$ ) à des blocs de données ($B_1,..., B_N$ ) et transmet ces demandes à un module de transchiffrement ($TCA$) ;

le module de transchiffrement *(TCA)*, recevant une demande d'accès ($arq_n$) à un bloc de données, transmet la demande d'accès à un module de prédiction de demandes d'accès ( $AP$ ) qui lui retourne une liste ($\Omega_n$) d'indices de blocs de données dont l'accès est prédit ;

le module de transchiffrement ($TCA$) lit le bloc de données ($B_n$) dans la base de données et détermine si un bloc de flux de clé correspondant est présent dans une mémoire cache du module de transchiffrement (TCA) et dans la négative ajoute l'indice du bloc absent à ladite liste d'indices de blocs de données, ladite liste d'indices de blocs de données étant fournie à un module de calcul homomorphe ($KSHC$) ;

le module de calcul homomorphe ($KSHC$) est adapté à calculer dans le domaine homomorphe des chiffrés homomorphes de blocs de flux de clé correspondant aux indices de blocs de données de ladite liste, et à transmettre les chiffrés homomorphes des blocs de flux de clé, au module de transchiffrement au fur et à mesure de leur obtention ;

le module de transchiffrement ($TCA$) stocke les chiffrés en homomorphe des blocs de flux de clé dans la mémoire cache, et transchiffre les blocs de données dont l'accès est demandé en les additionnant respectivement avec les chiffrés homomorphes des blocs de flux de clé correspondants, lus de la mémoire cache ;

le module de transchiffrement ($TCA$) transmet les blocs de données ainsi transchiffrés au module de gestion des requêtes ($RQM$) qui effectue, dans le domaine homomorphe, le traitement sur les blocs de données ainsi transchiffrés correspondant à la requête ;

le module de gestion des requêtes ($RQM$) transmet au client le résultat du traitement, sous forme chiffrée en homomorphe.

2. Méthode de traitement confidentiel de données selon la revendication 1, **caractérisée en ce que** les modules de gestion des requêtes, de transchiffrement, de prédiction de demandes d'accès et de calcul homomorphe sont des agents logiciels.

3. Méthode de traitement confidentiel de données selon la revendication 1, **caractérisée en ce que** les modules de gestion des requêtes, de transchiffrement, de prédiction de demandes d'accès et de calcul homomorphe sont installés sur une même machine.

4. Méthode de traitement confidentiel de données selon la revendication 1, **caractérisée en ce que** les modules de gestion des requêtes, de transchiffrement, de prédiction de demandes d'accès sont situés sur une première machine et que le module de calcul homomorphe est installé sur une seconde machine.

5. Méthode de traitement confidentiel de données selon la revendication 4, **caractérisée en ce que** la seconde machine est équipée d'un accélérateur matériel de chiffrement homomorphe.

6. Méthode de traitement confidentiel de données selon la revendication 4, **caractérisée en ce que** la seconde machine est un serveur, la première machine transmettant de manière asynchrone au serveur des requêtes de chiffrés en homomorphe de blocs de flux de clé pour des opérations de transchiffrement à effectuer ou pour des opérations de transchiffrement prédites.

7. Méthode de traitement confidentiel de données selon l'une des revendications précédentes **caractérisée en ce que** la plateforme héberge une pluralité de bases de données, chaque base de données étant alimentée par un fournisseur de données et étant associée à une clé de chiffrement symétrique, les blocs de données stockés dans une base de données étant chiffrés par le fournisseur de données alimentant la base, au moyen d'un flux de clé généré à partir de la clé symétrique associée à cette base de données.

8. Méthode de traitement confidentiel de données selon l'une des revendications précédentes, **caractérisée en ce que** la mémoire cache est gérée par un algorithme de remplacement de type FIFO.

9. Méthode de traitement confidentiel de données selon l'une des revendications 1 à 7, **caractérisée en ce que** la mémoire cache est gérée par un algorithme de remplacement de type LRU ou MRU.

**10.** Méthode de traitement confidentiel de données selon l'une des revendications précédentes **caractérisée en ce que** la plateforme comprend une pluralité de modules de prédiction d'accès, chaque module de prédiction d'accès étant adapté à prédire les demandes d'accès à une base de données associée à ce module.

**Patentansprüche**

**1.** Verfahren zur vertraulichen Verarbeitung von Daten, die auf einer Plattform gespeichert sind, wobei die Daten in einer Datenbank gespeichert werden, in einer durch Stromverschlüsselung verschlüsselten Form, unter Verwendung eines Schlüsselstroms, der ausgehend von einem symmetrischen Schlüssel generiert wurde, wobei die vertrauliche Verarbeitung auf Anfrage eines Clients durchgeführt wird, der zuvor ein Paar von geheimen Schlüsseln und einen öffentlichen Schlüssel eines homomorphen Kryptosystems generiert und diesen öffentlichen Schlüssel an die Plattform übermittelt hat, **dadurch gekennzeichnet, dass**:

ein Anfrageverwaltungsmodul ($RQM$), das eine Anfrage vom Client ($PR(i_a)$) empfängt, eine Vielzahl von Anforderungen zum Zugriff ($arq_1$, ..., $arq_N$) zu den Datenblöcken ($B_1$, ..., $B_N$) generiert und diese Anforderungen an ein Transkriptionsmodul ($TCA$) übermittelt;

das Transkriptionsmodul ($TCA$), das eine Anforderung zum Zugriff ($arq_n$) zu einem Datenblock empfängt, die Zugriffsanforderung an ein Vorhersagemodul von Zugriffsanforderungen ($AP$) übermittelt, das ihm eine Liste ($\Omega_n$) von Datenblockindizes zurückgibt, deren Zugriff vorhergesagt wurde;

das Transkriptionsmodul ($TCA$) den Datenblock ($B_n$) in der Datenbank liest und bestimmt, ob ein entsprechender Schlüsselstromblock in einem Cache-Speicher des Transkriptionsmoduls ($TCA$) vorhanden ist, und wenn nicht, den Index des fehlenden Blocks zur Datenblock-Indexliste hinzufügt, wobei die Datenblock-Indexliste einem Modul der homomorphen Berechnung ($KSHC$) zugeführt wird;

das Modul der homomorphen Berechnung ($KSHC$) geeignet ist, in der homomorphen Domäne homomorphe Chiffren von Schlüsselstromblöcken zu berechnen, die den Datenblockindizes in der Liste entsprechen, und die homomorphen Chiffren von Schlüsselstromblöcken an das Transkriptionsmodul nach und nach übermitteln, wenn sie erhalten werden;

das Transkriptionsmodul ($TCA$) die homomorphen Chiffren der Schlüsselstromblöcke im Cache-Speicher speichert und die Datenblöcke, deren Zugriff angefordert wurde, transkriptiert, indem sie jeweils mit den homomorphen Chiffren der entsprechenden Schlüsselstromblöcke, die im Cache-Speicher gelesen wurden, summiert werden;

das Transkriptionsmodul ($TCA$) die so transkriptierten Datenblöcke an das Anfrageverwaltungsmodul ($RQM$) übermittelt, das in der homomorphen Domäne die Verarbeitung der Datenblöcke durchführt, die so der Anfrage entsprechend transkriptiert wurden;

das Anfrageverwaltungsmodul ($RQM$) dem Client das Ergebnis der Verarbeitung in homomorpher Form verschlüsselt übermittelt.

**2.** Verfahren zur vertraulichen Verarbeitung von Daten nach Anspruch 1, **dadurch gekennzeichnet, dass** die Module der Anfrageverwaltung, Transkription, Vorhersage von Zugriffsanforderungen und homomorphen Berechnung Software-Agents sind.

**3.** Verfahren zur vertraulichen Verarbeitung von Daten nach Anspruch 1, **dadurch gekennzeichnet, dass** die Module der Anfrageverwaltung, Transkription, Vorhersage von Zugriffsanforderungen und homomorphen Berechnung auf derselben Maschine installiert sind.

**4.** Verfahren zur vertraulichen Verarbeitung von Daten nach Anspruch 1, **dadurch gekennzeichnet, dass** sich die Module der Anfrageverwaltung, Transkription und Vorhersage von Zugriffsanforderungen auf einer ersten Maschine befinden und das Modul der homomorphen Berechnung auf einer zweiten Maschine installiert ist.

**5.** Verfahren zur vertraulichen Verarbeitung von Daten nach Anspruch 4, **dadurch gekennzeichnet, dass** die zweite Maschine mit einem Hardwarebeschleuniger homomorpher Verschlüsselung ausgestattet ist.

**6.** Verfahren zur vertraulichen Verarbeitung von Daten nach Anspruch 4, **dadurch gekennzeichnet, dass** die zweite Maschine ein Server ist, wobei die erste Maschine dem Server auf asynchrone Weise Anfragen für homomorphe Chiffren von Schlüsselstromblöcken für durchzuführende Transkriptionsvorgänge übermittelt oder für vorhergesagte Transkriptionsvorgänge.

7. Verfahren zur vertraulichen Verarbeitung von Daten nach einem der vorhergehenden Ansprüche, **dadurch gekennzeichnet, dass** die Plattform eine Vielzahl von Datenbanken hostet, wobei jede Datenbank von einem Datenanbieter versorgt wird und einem symmetrischen Verschlüsselungsschlüssel zugeordnet ist, wobei die Datenblöcke, die in einer Datenbank gespeichert sind, vom Datenanbieter, der die Bank versorgt, mittels einem Schlüsselstrom verschlüsselt werden, der aus dem symmetrischen Schlüssel generiert wird, der dieser Datenbank zugeordnet ist.

8. Verfahren zur vertraulichen Verarbeitung von Daten nach einem der vorhergehenden Ansprüche, **dadurch gekennzeichnet, dass** der Cache-Speicher durch einen Ersetzungsalgorithmus vom Typ FIFO verwaltet wird.

9. Verfahren zur vertraulichen Verarbeitung von Daten nach einem der Ansprüche 1 bis 7, **dadurch gekennzeichnet, dass** der Cache-Speicher durch einen Ersetzungsalgorithmus vom Typ LRU oder MRU verwaltet wird.

10. Verfahren zur vertraulichen Verarbeitung von Daten nach einem der vorhergehenden Ansprüche, **dadurch gekennzeichnet, dass** die Plattform eine Vielzahl von Zugriffsvorhersagemodulen umfasst, wobei jedes Zugriffsvorhersagemodul dazu geeignet ist, die Anforderungen für den Zugriff auf eine Datenbank, die diesem Modul zugeordnet ist, vorherzusagen.

## Claims

1. A method for confidentially processing data stored on a platform, the data being stored in a database, in a form encrypted by stream encryption, using a key stream generated from a symmetric key, the confidential processing being performed on request from a client having generated beforehand a private key and public key pair of a homomorphic cryptosystem and having transmitted said public key to the platform, **characterised in that**:

   a request management module ($RQM$), receiving a request from the client ($PR(i_a)$), generates a plurality of requests for access ($arq_1, \ldots, arq_n$) to data blocks ($B_1, \ldots, B_N$) and transmits these requests to a transcryption module ($TCA$);
   the transcryption module ($TCA$), receiving a request for access ($arq_n$) to a data block, transmits the access request to an access request prediction module ($AP$) which returns thereto a list ($\Omega_n$) of indexes of data blocks the access to which is predicted;
   the transcryption module ($TCA$) reads the data block ($B_n$) in the database and determines whether a corresponding key stream block is present in a cache of the transcryption module ($TCA$), and if not, adds the index of the absent block to said list of indexes of data block, said list of indexes of data blocks being supplied to a homomorphic calculation module ($KSHC$);
   the homomorphic calculation module ($KSHC$) is adapted to calculate, in the homomorphic domain, homomorphic ciphertexts of key stream blocks corresponding to the indexes of data blocks of said list, and to transmit the homomorphic ciphertexts of the key stream blocks to the transcryption module as they are obtained;
   the transcryption module ($TCA$) stores the homomorphic ciphertexts of the key stream blocks in the cache, and transcrypts the data blocks the access to which is requested by adding them respectively with the homomorphic ciphertexts of the corresponding key stream blocks, read from the cache;
   the transcryption module ($TCA$) transmits the data blocks thus transcrypted to the request management module ($RQM$) which performs, in the homomorphic domain, the processing on the data blocks thus transcrypted corresponding to the request;
   the request management module ($RQM$) transmits to the client the result of the processing, in an homomorphically encrypted form.

2. The data confidential processing method according to claim 1, **characterised in that** the request management, transcryption, access request prediction and homomorphic calculation modules consist of software agents.

3. The data confidential processing method according to claim 1, **characterised in that** the request management, transcryption, access request prediction and homomorphic calculation modules are installed on the same machine.

4. The data confidential processing method according to claim 1, **characterised in that** the request management, transcryption, access request prediction modules are located on a first machine and the homomorphic calculation module is installed on a second machine.

5. The data confidential processing method according to claim 4, **characterised in that** the second machine is equipped with a homomorphic encryption hardware accelerator.

6. The data confidential processing method according to claim 4, **characterised in that** the second machine is a server, the first machine asynchronously transmitting to the server requests for homomorphic ciphertexts of key stream blocks for transcryption operations to be performed or for predicted transcryption operations.

7. The data confidential processing method according to one of the preceding claims, **characterised in that** the platform hosts a plurality of databases, each database being fed by a data provider and being associated with a symmetric encryption key, the data blocks stored in a database being encrypted by the data provider feeding the base, by means of a key stream generated from the symmetric key associated with this database.

8. The data confidential processing method according to one of the preceding claims, **characterised in that** the cache is managed by a FIFO-type replacement algorithm.

9. The data confidential processing method according to one of claims 1 to 7, **characterised in that** the cache is managed by an LRU- or MRU-type replacement algorithm.

10. The data confidential processing method according to one of the preceding claims, **characterised in that** the platform comprises a plurality of access prediction modules, each access prediction module being adapted to predict the requests for access to a database associated with this module.

$$\text{CLT} \quad \begin{array}{l} HE.sk \\ HE.pk \end{array} \qquad\qquad \text{PTF} \quad HE.pk$$

$$110 \left\{ \begin{array}{l} generate\ (HE.sk, HE.pk) \\ HE.pk \end{array} \right.$$

$$120 \left\{ \quad generate\ ksym \right.$$

$$130 \left\{ \quad Enc(HE.pk, ksym) \right.$$

$$140 \left\{ \begin{array}{l} calculate\ S(ksym, a) \\ S(kysm, a) \end{array} \right.$$

$$150 \left\{ \quad Enc(HE.pk, S(Ksym, a)) \right.$$

$$160 \left\{ \quad S_{HE}^{-1}\left( Enc(HE.pk, ksym), Enc(HE.pk, S(kysm, a)) \right) \right.$$

$$170 \left\{ \quad Enc(HE.pk, r) = F_{HE}\left( Enc(HE.pk, a) \right) \right.$$

$$Enc(HE.pk, r) \left. \right\}\ 180$$

$$190 \left\{ \quad r = Dec\left( HE.sk, Enc(HE.pk, r) \right) \right.$$

**Fig. 1**

EP 3 861 670 B1

CLT — HE.sk, HE.pk

PTF — HE.pk

DP — HE.pk

210 $generate\left(HE.sk, HE.pk\right)$

215 $HE.pk$

220 $generate\ ksym$

225 $Enc\left(HE.pk, ksym\right)$

230 $S\left(ksym, a\right)$

240 $Enc\left(HE.pk, S\left(ksym, a\right)\right)$

245 $generate\ Enc\left(HE.pk, Kstr\right)$

250 $S_{HE}^{-1}\left(Enc\left(HE.pk, ksym\right), Enc\left(HE.pk, S\left(ksym, a\right)\right)\right)$

260 $PR(i_a)$

270 $Enc(HE.pk, r) = F_{HE}\left(Enc(HE.pk, a)\right)$

280 $Enc(HE.pk, r)$

290 $Dec\left(HE.sk, Enc\left(HE.pk, r\right)\right) = r$

**Fig. 2**

**Fig. 3**

EP 3 861 670 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Stream-ciphers : a practical solution for efficient homomorphic-ciphertext compression. **A. CANTEAU et al.** FSE 2016 : 23rd International Conférence on Fast Software Encryption. Springer Verlag, 20 Mars 2016, vol. 9783, 313-333